# EUROPEAN PATENT APPLICATION

(11) **EP 3 185 036 A1**
(43) Date of publication of application: **28.06.2017**
(21) Application number: 16205727.7
(22) Date of filing: 21.12.2016
(51) Int. Cl.: G01S 15/93, G01S 7/521, G10K 9/22, G10K 11/00

(54) **ULTRASONIC SENSOR**

(30) Priority: 23.12.2015 CN 201510976521
(71) Applicant: Valeo Interior Controls (Shenzhen) Co., Ltd, 518128 Shenzhen (CN)
(72) Inventor: Wang, Haidong, Shenzhen, 518128 (CN)
(74) Representative: Pothmann, Karsten

(57) **Abstract**

The present disclosure provides an ultrasonic sensor (100) comprising:
- a potshaped metal membrane body (110);
- a ceramic disk (130) arranged at a bottom area of the metal membrane body (110), including a first side (131) and a second side (132) opposite to the first side (131), wherein the first side (131) and the second side (132) are electrically isolated with each other and the first side (131) is electrically connected with the metal membrane body (110);
- a first cable (141) and a second cable (142), wherein the first cable (141) is electrically connected with the metal membrane body (110) and the first side (131) via conductive material (143) and the second cable (142) is electrically connected with the second side (132), and wherein the second cable (142) is electrically isolated with the conductive material (143) and the metal membrane body (110) at the electrical connection point (133) between the second cable (142) and the second side (132) via isolating material (144).

## Description

### TECHNOLOGY

The present disclosure relates to an ultrasonic sensor, and particularly to an ultrasonic generator comprising the ultrasonic sensor, an ultrasonic receiver comprising the ultrasonic sensor, and a vehicle with the ultrasonic sensor.

### BACKGROUND

Recently, the demand for the ultrasonic sensor is increasing. For example, an ultrasonic sensor can be installed in a variety of vehicles for short distance detection, for example.

In a conventional ultrasonic sensor, two cables are respectively soldered to a ceramic disk in the body of the ultrasonic sensor and the body of the ultrasonic sensor. Since the ultrasonic sensor is usually small, this kind of soldering will make the process complicated and time consuming, and thus generate inconvenience.

Further, in this conventional ultrasonic sensor, the two sides, upper surface and lower surface of the ceramic disk must be conductive, so as to connect the corresponding cables respectively. This will further enhance the difficulty of the manufacturing process of the ultrasonic sensor.

### SUMMARY

In view of the existing technical problem, an ultrasonic sensor, which can be manufactured easily and have a high quality, is provided in the present disclosure.

According to a first aspect of the present disclosure, an ultrasonic sensor is proposed, comprising:- a potshaped metal membrane body;- a ceramic disk arranged at a bottom area of the metal membrane body, including a first side and a second side opposite to the first side, wherein the first side and the second side are electrically isolated with each other and the first side is electrically connected with the metal membrane body;- a first cable and a second cable, wherein the first cable is electrically connected with the metal membrane body and the first side via conductive material and the second cable is electrically connected with the second side, and wherein the second cable is electrically isolated with the conductive material and the metal membrane body at the electrical connection point between the second cable and the second side via isolating material.

Advantageously, the conductive material includes conductive sealant. For example, it can be a conductive polyfoam.

Advantageously, the second cable is electrically connected with the second side via the way of soldering.

Advantageously, the ceramic disk includes a piezoelectric ceramic disk.

Advantageously, the ceramic disk is mounted on the bottom of the metal membrane body.

Advantageously, the material of the metal membrane body includes aluminum and copper.

Advantageously, the first cable and the second cable are electrically isolated with each other.

Advantageously, the first cable is connected to a negative pole and/or the second cable is connected to a positive pole.

Advantageously, the isolating material is disposed between the ceramic disk and the conductive material, and disposed such that the second side is electrically isolated with the conductive material and the metal membrane body.

According to a second aspect of the present disclosure, it is proposed an ultrasonic generator comprising an ultrasonic sensor according to the present disclosure.

According to a third aspect of the present disclosure, it is proposed an ultrasonic receiver comprising an ultrasonic sensor according to the present disclosure.

According to a fourth aspect of the present disclosure, it is proposed a vehicle comprising an ultrasonic sensor according to the present disclosure. Of course, the ultrasonic sensor according to the present disclosure can be applied to other kinds of traffic means, such as ship, aircraft and etc.

Through the present disclosure, only one cable is required to be electrically connected to the ceramic disk (via soldering, for example). This will significantly reduce the difficulty of the manufacturing process of an ultrasonic sensor. For example, it is not necessary to add other soldering processes in the ultrasonic sensor with a small volume. Further, in the present disclosure, the ceramic disk can only be conductive on the upper surface and lower surface, which will further improve the process difficulty and enhance the quality when the product is used.

The respective aspects of the embodiments of the disclosure will be more clear through the illustration of the detailed embodiments below.

### BRIEF DESCRIPTION OF THE DRAWINGS

Other features, objects and advantages of the invention will become more apparent upon review of the following detailed description of non-limiting embodiments taken with reference to the drawings in which:
Figure 1 illustrates a diagram of an ultrasonic sensor 100 according an embodiment of the present disclosure;
Figure 2 illustrates a diagram of an ultrasonic generator 200 according another embodiment of the present disclosure;
Figure 3 illustrates a diagram of an ultrasonic receiver 300 according another embodiment of the present disclosure; and
Figure 4 illustrates a diagram of a vehicle 400 according another embodiment of the present disclosure.
In the drawings, identical or like reference numerals denote identical or corresponding components or features throughout the different figures.

### DETAILED DESCRIPTION

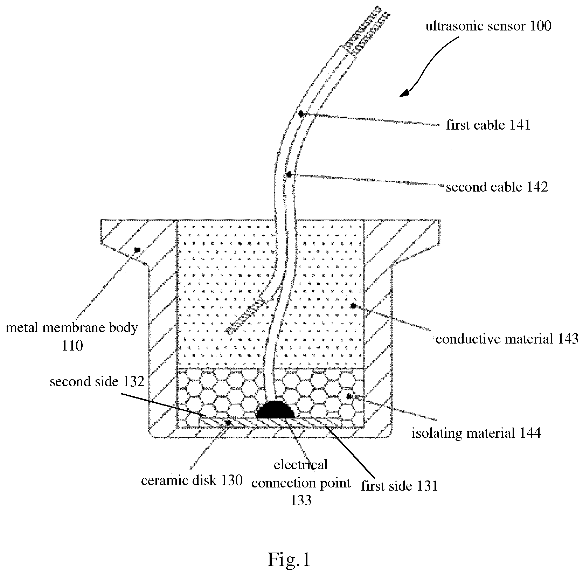

Figure 1 illustrates a diagram of an ultrasonic sensor 100 according an embodiment of the present disclosure.

As shown in Fig.1, the ultrasonic sensor 100 comprises a potshaped metal membrane body 110. Advantageously, this metal membrane body 110 can be made with aluminum or copper. Alternatively, the metal membrane body 110 can be made with any other proper metal materials.

In the potshaped metal membrane body 110, there are conductive materiel 143, isolating material 144 and a ceramic disc 130 from above to below.

Specifically, in the bottom area of the metal membrane body 110, the ceramic disk 130 is arranged. The ceramic disk 130 can be a piezoelectric ceramic disk, for example. In a preferable embodiment of the present disclosure, the ceramic disk 130 can be mounted on the bottom of the metal membrane body 110. The ceramic disk 130 can be made as cylinder, pillar, for example, and any other proper shapes.

Further, the ceramic disk 130 includes a first side 131 and a second side 132 opposite to the first side 131. Herein, the first side 131 and the second side 132 of the ceramic disk 130 are conductive, and electrically isolated with each other. The sides of the ceramic disc 130 do not need to be conductive.

Additionally, the first side 131 of the ceramic disk 130 is electrically connected with the metal membrane body 110. The second side 132 of the ceramic disk 130 is electrically connected with a second cable 142 (which will be discussed in detail below).

Still referring to Fig.1, a first cable 141 and a second cable 142 extend into the metal membrane body 110 respectively. The two terminals of the first cable 141 and the second cable 142, which are outside the metal membrane body 110, are respectively connected to a negative pole and a positive pole of a power supply, for example.

Herein, the first cable 141 is connected through the conductive material 143 in the metal membrane body 110 and the metal membrane body 110, and thus is electrically connected with a first side 131 of the ceramic disk 130. The conductive material 143 can be conductive sealant, for example, such as a conductive polyfoam and etc.

Through this kind of electrical connection, the first cable 141 can be connected to the metal membrane body 110 conveniently without additional soldering. Thereby, the manufacturing process is simplified, and the unnecessary worn generated from the usage of the ultrasonic sensor 100 can be avoided.

The isolating material 144 is arranged between the ceramic disk 130 and the conductive material 143. The second cable 142 extends through the conductive material 143 and the isolating material 144, and finally is electrically connected with the second side 132 of the metal membrane body 110. Advantageously, the second cable 142 is electrically connected with the second side 132 via the way of soldering.

Through the usage of the isolating material 144, the second cable 142 is electrically isolated respectively with the conductive material 143 and the metal membrane body 110 at the electrical connection point 133 between the second cable 142 and the second side 132. For example, this kind of isolating material 144 can be implemented by configuring an isolating layer. Further, through the usage of the isolating material 144, the second side 132 of the ceramic disk 130 is also electrically isolated with the conductive material 143. Through the above manner, the first cable 141 and the second cable 142 can be especially ensured to be isolated with each other.

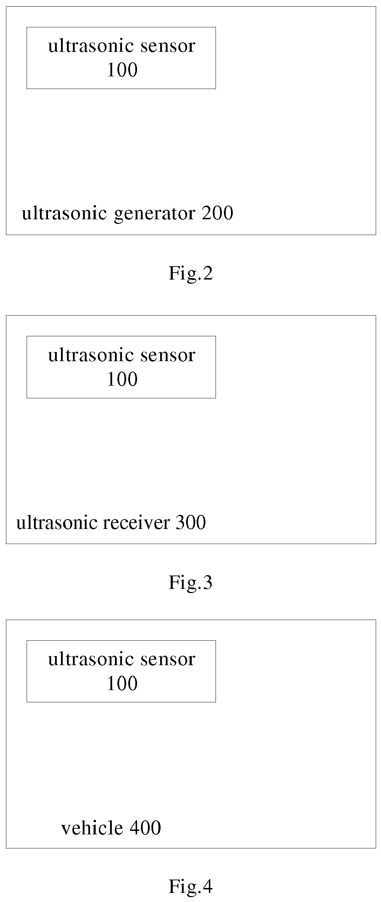

Figs. 2-4 illustrate the application diagrams of the ultrasonic sensor 100 in an ultrasonic generator 200, an ultrasonic receiver 300 and a vehicle 400.

Through the usage of the above ultrasonic sensor, the obstacle can be accurately detected, and the installation fault, which is caused by the too much soldering and/or the requirement that the sides of the ceramic disk should be additionally configured as conductive, and the performance degradation resulted therefrom in the prior art can be avoided.

It shall be appreciated that the foregoing embodiments are merely illustrative but will not limit the invention. Any technical solutions without departing from the spirit of the invention shall fall into the scope of invention, including that different technical features, methods appearing in different embodiments are used to combine to advantage. Further, any reference numerals in the claims cannot be recognized as limiting the related claims; the term "comprise" will not preclude another apparatus or step which does not appear in other claims or the description.

## Claims

1. An ultrasonic sensor (100) comprising:
- a potshaped metal membrane body (110);
- a ceramic disk (130) arranged at a bottom area of the metal membrane body (110), including a first side (131) and a second side (132) opposite to the first side (131), wherein the first side (131) and the second side (132) are electrically isolated with each other and the first side (131) is electrically connected with the metal membrane body (110);
- a first cable (141) and a second cable (142), wherein the first cable (141) is electrically connected with the metal membrane body (110) and the first side (131) via conductive material (143) and the second cable (142) is electrically connected with the second side (132), and wherein the second cable (142) is electrically isolated with the conductive material (143) and the metal membrane body (110) at the electrical connection point (133) between the second cable (142) and the second side (132) via isolating material (144).

2. The ultrasonic sensor (100) according to claim 1, **characterized in that** the conductive material (143) includes conductive sealant.

3. The ultrasonic sensor (100) according to claim 1, **characterized in that** the second cable (142) is electrically connected with the second side (132) via the way of soldering.

4. The ultrasonic sensor (100) according to claim 1, **characterized in that** the ceramic disk (130) includes a piezoelectric ceramic disk.

5. The ultrasonic sensor (100) according to claim 1, **characterized in that** the ceramic disk (130) is mounted on the bottom of the metal membrane body (110).

6. The ultrasonic sensor (100) according to claim 1, **characterized in that** the material of the metal membrane body (110) includes aluminum and copper.

7. The ultrasonic sensor (100) according to claim 1, **characterized in that** the first cable (141) and the second cable (142) are electrically isolated with each other.

8. The ultrasonic sensor (100) according to claim 1, **characterized in that** the first cable (141) is connected to a negative pole and/or the second cable (142) is connected to a positive pole.

9. The ultrasonic sensor (100) according to claim 1, **characterized in that** the isolating material (144) is disposed between the ceramic disk (130) and the conductive material (143), and disposed such that the second side (132) is electrically isolated with the conductive material (143) and the metal membrane body (110).

10. An ultrasonic generator (200), **characterized in that** the ultrasonic generator (200) comprises an ultrasonic sensor (100) according to any of claims 1 to 9.

11. An ultrasonic receiver (300), **characterized in that** the ultrasonic receiver (300) comprises an ultrasonic sensor (100) according to any of claims 1 to 9.

12. A vehicle (400), **characterized in that** the vehicle (400) comprises an ultrasonic sensor (100) according to any of claims 1 to 9.
